# EUROPEAN PATENT APPLICATION

(11) **EP 1 303 095 A1**
(43) Date of publication of application: **16.04.2003**
(21) Application number: 01308809.1
(22) Date of filing: 16.10.2001
(51) Int. Cl.: H04L 29/06, H04M 7/00, H04L 12/26

(54) **Interception of a communications session between two nodes**

(71) Applicant: TELEFONAKTIEBOLAGET LM ERICSSON, 126 25 Stockholm (SE)
(72) Inventor: Fallon, Liam, c/o Ericsson Systems Expeterise Ltd., Athlone, County Westmeath (IE)
(74) Representative: Vigars, Christopher Ian

(57) **Abstract**

A method for intercepting a communication session in a telecommunications network includes rerouting the session via an interception gateway. At the interception gateway, the session is duplicated and forwarded to the original destination.

## Description

The present invention relates to telecommunications systems, and in particular to a method for intercepting communication sessions in such a system.

### BACKGROUND OF THE INVENTION

Interception of communication sessions in a telecommunications system is a mechanism by which a communication session is duplicated and monitored. A communication session may be monitored for any number of reasons, including:
monitoring the content of communication sessions for a particular user as a result of a court order from the authorities in a legal jurisdiction,
monitoring the content of a communication session in order to assess the quality of the communication session, and
monitoring the content of a communication session in order to determine the correctness of the protocol being used in that communication session, for example for compatibility reasons.

Previously considered methods of intercepting communication sessions operate to branch the communication session to an interception node. The communication session then returns along the branch formed by the interception stage for routing along the original network route to the original destination node.

### SUMMARY OF THE PRESENT INVENTION

One embodiment of the present invention provides a method for intercepting a communication session between first and second nodes in the telecommunications network, the method comprising steps of:
detecting a communication session which fulfils at least one operator-defined criterion;
rerouting the detected communication session to pass through a third node between the said first and second nodes such that the detected communication session passes from the first node to the third node and from the third node to the second node; and
duplicating the detected communication session at the third node.

### BRIEF DESCRIPTION OF THE DRAWINGS

Figure 1 illustrates a communication session in a telecommunications network, before interception;
Figure 2 illustrates the communication session of Figure 1 after interception; and
Figure 3 is a flow chart illustrating a method embodying the present invention.

### DETAILED DESCRIPTION

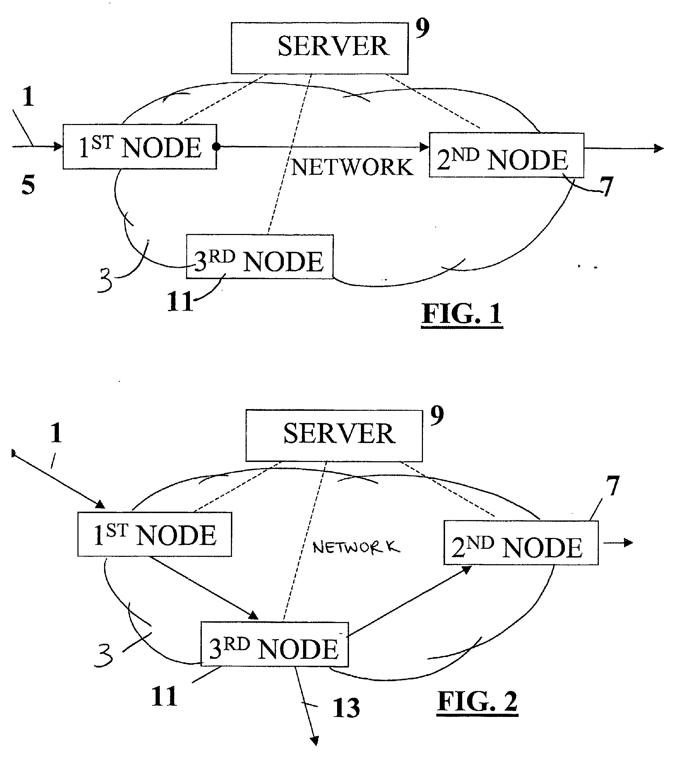

Figure 1 illustrates a communication session 1 which is routed through a telecommunications network 3 from a first node 5 to a second node 7. A network server 9 controls routing of the communication session 1 through the network 3. Before interception, the communication session 1 is routed from the first node (or gateway) 5 to the second node (or gateway) 7. In one particular example of the present invention, the media gateway control protocol (MGCP) (see ITU-T recommendation H.248 "Gateway protocol" at www.itn.int) is used by the server to control the first and second gateways 5 and 7.

Figure 2 illustrates the route of the communication session 1 after interception. The session 1 is routed via a third gateway 11. The third (or "interception") gateway 11 operates to duplicate the communication session, and also to route the session on to the second gateway 9.

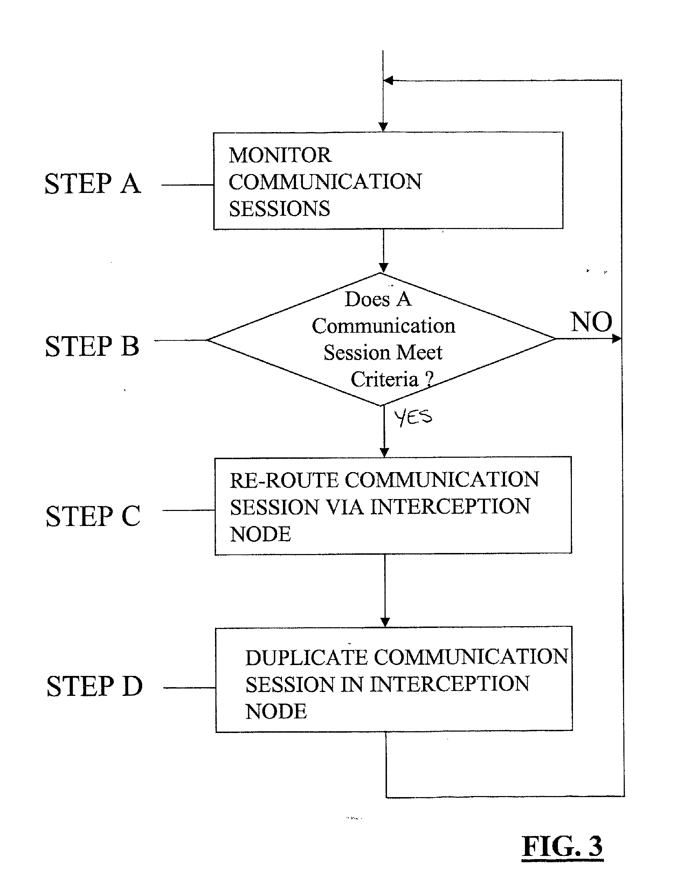

Figure 3 illustrates a method embodying the present invention. At step A the server 9 checks communication sessions that are occurring in the network. Communication sessions are checked to determine whether any one of them meets some predetermined operator-defined criteria. For example, the operator may choose the criteria from the following: initiating user identification (telephone number, e-mail address, IP address etc.), terminating user identification (telephone number, e-mail address, IP address etc.), source location (area, district, country etc.) or destination location (area, district, country, etc.). If the checked communication session does not fulfil the criteria, then communication sessions continue to be checked periodically. If, however, a communication session is detected that does meet the predetermined criteria, then that communication session is rerouted (step C)via a third (or interception) node or (gateway) 11. At step D, the interception gateway 11 duplicates the intercepted communications session for monitoring.

In one example, the server 9 uses the MGCP protocol to control the first and second gateways 5 and 7 in order to change the route of the intercepted communication session in the network so that the session passes through the third gateway 11. The server 9 also uses the MGCP protocol to cause the third node to route the communication session to the second node and also to duplicate the communication session. The copy of the intercepted communication session is then handled in the interception gateway. The intercepted communication session is saved and forwarded to an appropriate authority.

In one particular example, the telecommunications network is a multi-services network, which uses media gateways as entry and exit points (ie. the first and second nodes).

## Claims

1. A method for intercepting a communication session between first and second nodes in a telecommunications network, the method comprising the steps of:
detecting a communication session which fulfils at least one operator-defined criterion;
re-routing the detected communication session to pass through a third node of the network, the third node being between the first and second nodes such that the detected communication session passes from the first node to the third node and from the third node to the second node; and
duplicating the detected communication session at the third node.

2. A method as claimed in claim 1, wherein the telecommunications network is a multi-service network.

3. A method as claimed in claim 1 or 2, wherein the first, second and third nodes are media gateways.

4. A method as claimed in claim 3, wherein the communications session is re-routed using the MGCP protocol.

5. A method as claimed in any one of the preceding claims, wherein control of the first, second and third nodes is provided by a telecommunications network server.
